# EUROPEAN PATENT APPLICATION

(11) **EP 3 587 844 A1**
(43) Date of publication of application: **01.01.2020**
(21) Application number: 18179024.7
(22) Date of filing: 21.06.2018
(51) Int. Cl.: F16C 9/04, F16C 33/14, F16C 17/02, F16C 33/10

(54) **CONNECTING ROD**

(71) Applicant: ThyssenKrupp Metalúrgica Campo Limpo Ltda., 13231-900 Campo Limpo Paulista-SP (BR); thyssenkrupp AG, 45143 Essen (DE)
(72) Inventor: de Souza Rodrigues, Alex, 13240-000 Jarinu Sao Paulo (BR); Atoatte, Almir, 13202-265 Jundiai - Sao Paulo (BR); Galera, Larissa, 09726-200 Jardim do Mar, São Bernardo do Campo, Sao Paulo (BR)
(74) Representative: thyssenkrupp Intellectual Property GmbH

(57) **Abstract**

The invention relates to a connecting rod (1) for an internal combustion engine, comprising a small end eye (2) for receiving a piston pin, a big end eye (3) for receiving a pin journal of a crank shaft, a rod shaft (4) which interconnects the small end eye with the big end eye, and which rod shaft extends in a longitudinal rod axis (5), and whereas the big end eye features an inner shape (6) which forms an elliptic contour (7) with a small ellipse axis (8) and a large ellipse axis (9) extending perpendicularly to the small ellipse axis, whereas the small ellipse axis extends in the direction of the longitudinal rod axis (5). In order to provide a connecting rod for an internal combustion engine with an improved connecting rod eye shape, in order to consider the deformation behaviour when the piston rod is running in an internal combustion engine, and in order to combine an optimized shape with an improved oil flow behaviour in particular for the big end eye of the connecting rod, it is proposed that the inner shape features at least one notch (10) for forming a gap between the pin journal of the crank shaft and the big end eye for oil flow increase.

## Description

The present invention relates to a connecting rod for an internal combustion engine, comprising a small end eye for receiving a piston pin, a big end eye for receiving a piston journal of a crank shaft, a rod shaft which interconnects the small end eye with the big end eye, and which rod shaft extends in a longitudinal rod axis.

### PRIOR ART

DE 10 2006 013 399 A1 discloses a connecting rod for an internal combustion engine, comprising a small end eye for receiving a piston pin and a big end eye for receiving a piston journal of a crank shaft, and the connecting rod features a rod shaft which interconnects the small end eye with the big end eye and which rod shaft extends in a longitudinal rod axis. At least one connecting rod eye has at least one geometric deviation from a cylindrical inner shape of the eye. The inner shape of the big end eye forms a slide bearing surface, which surface is subject to very great mechanical stress. In particular, the big end eye of the connecting rod can deform and deviate from a cylindrical shape with each stroke, when the connecting rod is running in an internal combustion engine. Therefore, ways are being thought to relieve stress on the connecting rod eyes. This is done, for example, by means of local geometric changes in the usually cylindrical connecting rod eyes, which reduce mechanical stresses. Such geometric changes can be, for example, stress relieve pockets, oval, elliptical or conical bores.

Another aspect for improving connecting rods is the lubrication principle. Usually, lubrication pockets are known to form a reservoir for the lubricant. DE 10 2006 013 399 A1 discloses lubricant channels and pockets to hold the lubricant for use in the lubrication gap between the pin journal of the crank shaft and the big end eye of the connecting rod forming a slide bearing. The channels and pockets for the lubricant are formed by means of a coating system on the surface of the inner shape of the connecting rod eyes.

US 9,291,192 B2 discloses a connecting rod of an internal combustion engine, that includes a large bore, and an interior bore surface. The large bore end interior diameter is coated with a hard material to reduce or eliminate wear. It is also possible to apply a soft material over the hard layer. The coating of this soft material may be worn off the inner diameter surface; this delay in surface to surface contact to a sprayed metal layer has beneficial effects on the sprayed metal layer. The delay of surface to surface contact will usually result in a longer service life of the sprayed metal coating. In one embodiment the inner shape of the coating forms an elliptic contour, which contour will worn off after a first time of use.

### DISCLOSURE OF INVENTION

The object of present invention is to provide a connecting rod for an internal combustion engine with an improved connecting rod eye shape, in order to consider the deformation behaviour when the piston rod is running in an internal combustion engine, and it is a special objective of the present invention to combine an optimized shape with an improved oil flow behaviour in particular for the big end eye of the connecting rod.

This objective is achieved by a connecting rod as thought by claim 1 of the present invention. Advantageous embodiments of the inventive connecting rod are defined in the sub-claims.

The invention discloses the technical teaching that the big end eye features an inner shape which can form an elliptic contour with a small ellipse axis and a large ellipse axis extending perpendicularly to the small ellipse axis, whereas the small ellipse axis extends in the direction of the longitudinal rod axis and whereas the inner shape features at least one notch for forming a gap between a pin journal of a crank shaft and the big end eye of the connecting rod for oil flow increase.

In the sense of the invention the geometrical features regarding the elliptic contour of the inner shape and the at least one notch in the inner shape are formed in the material of the big end eye of the connecting rod itself, that is that the stem part or the cap part form the geometric features in their material but not in a coating or the like. But in the sense of the invention it is also possible that the big end eye features at least one bearing shell or coating in which the geometrical features are applied.

The core idea of the inventive inner shape of the big end eye bases on an elliptic contour in a circumferential direction of the big end eye, with a small ellipse axis and a large ellipse axis, and the small ellipse axis extends in the main stress direction, when the connecting rod is running in an internal combustion engine. The large ellipse axis leads to an enlarged gap between the pin journal of the crank shaft and the inner shape, and this enlarged gap forms a gap which allows oil flow increase, in particular in the axial direction of the bearing. In other words, two gaps for oil flow increase are provided in a laterally arrangement next to the zones of force transmission between the pin journal and the connecting rod.

The combination of the ovalization and the notches is used in this invention to improve in particular the axial oil flow. The increase of the axial oil flow surprisingly leads to a higher oil recirculation within the bearing width, which reduces the oil temperature and guarantees the maintenance of its properties. In order to meet this advantages, the at least one notch is formed along the total width of the bearing.

This invention is best applicable for bearings with coatings, shells or special bearing geometries, that don't have a good thermal conductivity. In these cases a higher axial oil flow is beneficial. The position of the notches or reliefs must be perpendicularly to the rod axis, since during inertial forces acting of the connecting rod during operation, the cap part may deform at these regions when the engine is running, and so, even in these moments, the elliptic contour of the inner shape in combination with the notches can guarantee a higher distance between the crank pin of the crankshaft and the inner shape of the big end eye of the connecting rod. This mainly helps to improve the axial flow of oil in addition to other lubrication improvements already known, e.g. the reduction of the peak asperity contact pressure.

The main positive effect of the elliptic shape of the big end eye is the "breathing" behavior of the ellipse, when the piston rod is running in an operating internal combustion engine. This breathing-behavior provides a pumping effect for pumping the lubricant into the gap between the pin journal and the big end eye in the area of the small ellipse axis. With each stroke, the small ellipse axis elongates in the range of several micro meters, and as an effect of a transvers contraction the length of the large ellipse axis decreases in the same range of some microns. This pumping effect improves the transport of lubricant in the gap between the pin journal of the crank shaft and the inner shape of the big end eye in the area of the force transmission.

The combination of an elliptic contour of the inner shape of the big end eye with the at least one notch located in the inner shape of the big end eye, which is proposed by the present invention, has the surprising effect that a sufficient radial clearance can be provided between the inner shape of the big end eye and the crankpin of the crankshaft, even if a cap part of the connecting rod is deformed heavily under inertia and gas forces acting on the connecting rod during engine operation. An increased oil flow can thereby be maintained constantly, that means in any operating condition / speed of the internal combustion engine.

In one embodiment of the invention, the combination of an elliptic contour of the inner shape of the big end eye with the at least one notch located in the inner shape of the big end eye can be used beneficially in internal combustion engines with crankshaft pin journals that have a cylindrical shape in the axial direction. The connecting rods used in combination with such cylindrically shaped crankshaft pin journals feature a straight inner shape of the big end eye in its axial direction.

In another embodiment of the invention the combination of an elliptic contour of the inner shape of the big end eye with the at least one notch located in the inner shape of the big end eye can be used in internal combustion engines where the crankshaft pin journal in its axial direction and the inner shape of the big end eye of the connecting rod in its axial direction feature a so-called U-shape contour. This means the crankshaft pin journal features a concave profile in its axial direction and the inner shape of the big end eye features a convex profile in its axial direction.

It was found that the invention leads to a significant increase of the axial oil flow rate, even when the connecting rod and especially the cap part of the connecting rod is significantly deformed due to the forces acting on it during operation of the internal combustion engine.

According to one central aspect of the present invention, the inner shape features at least one notch for forming a gap for oil flow. In particular, at least one notch is located in the inner shape in a circumferential area of the large ellipse axis of the elliptic contour. According to another improvement, the inner shape features two notches which are located opposite to each other. In its preferred embodiment, two notches are arranged in the intersection point of the large ellipse axis with the inner shape of the big end eye. In conjunction with the elliptic contour, the inner shape of the big end eye forms a lemon shape.

In other words, the lemon formed by the lemon shape of the big end eye of the connecting rod lies in a horizontally extension, when the longitudinal rod axis is oriented in a vertical direction. The upper and lower tip of the lemon shape are formed by means of two notches in the inner shape of the big end eye. These two notches are arranged in the intersection point of the large ellipse axis with the inner shape.

The special so called lemon shape forms an optimized conjunction between an elliptic contour considering the breathing behaviour on the one hand and the notches for forming a gap for the in particular axial oil flow on the other hand. When the big end eye is "breathing", the positive effect can be used to transport the lubricant into the lubrication gap which is, with respect to the main force transmission area, located in the area of the small ellipse axis.

The transmission of the elliptic contour into the at least one notch forms a radius contour. The notches can be machined into the inner shape of the big end eye and the notches are, but not necessarily, formed into the inner shape in order to prepare the connecting rod for a cracking process between a stem part and a cap part.

In particular, the connecting rod features a two part form with a stem part and with a cap part which is connected to the stem part, in particular by means of screws.

The aforementioned components, as well as the claimed components and the components to be used in accordance with the invention in the described embodiments are not subject to any special exceptions with respect to their size, shape, material selection and technical concept such as the selection criteria known in the pertinent field can be applied without limitations.

### PREFERED EMBODIMENT OF THE INVENTION

Additional details, characteristics and advantages of the object of the invention are disclosed in the sub-claims and the following description of the respective figures, which show preferred embodiments of the connecting rod according to the invention. It shows
- fig. 1: a first embodiment of a connecting rod with a big end eye according to the present invention and
- fig. 2: a connecting rod with an inclined parting line.

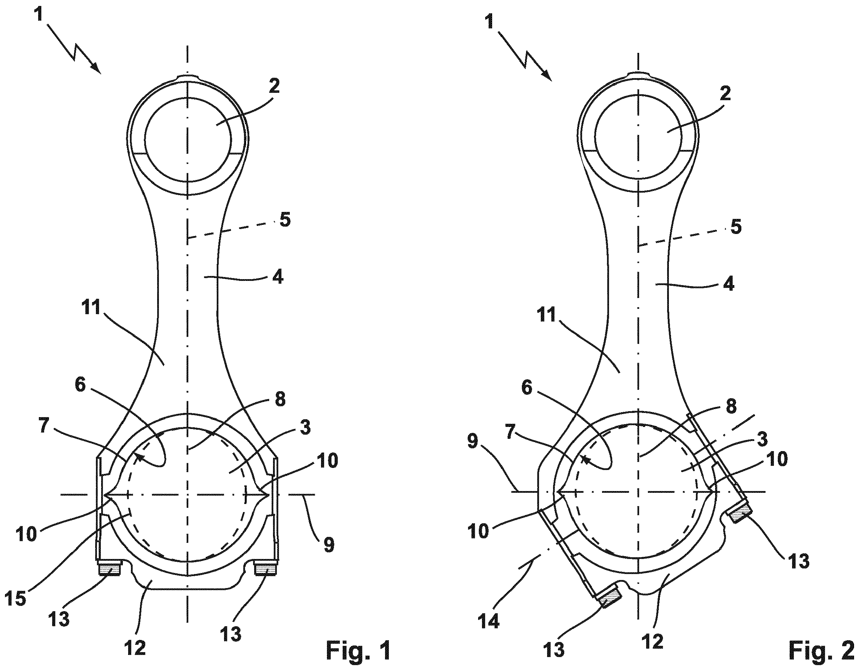

The connecting rod 1 according to figure 1 features a small end eye 2 for receiving a piston pin and a big end eye 3 for receiving a pin journal of a crank shaft, and the connecting rod 1 features a rod shaft 4 which interconnects the small end eye 2 with the big end eye 3, and whereas the rod shaft 4 extends in a longitudinal rod axis 5. When the connecting rod 1 is running in an internal combustion engine, the main force stress is directed onto the connecting rod 1 in the longitudinal rod axis 5.

The embodiment of the connecting rod 1 features the two-part-form with an upper stem part 11 and a lower cap part 12. The lower cap part 12 is connected to the stem part 11 by means of screws 13.

The big end eye 3 features an inner shape 6 which deviates from a cylindrical shape and forms an elliptic contour 7 with a small ellipse axis 8 and a large ellipse axis 9 extending perpendicularly to the small axis 8, whereas the small ellipse axis 8 extents in the direction of the longitudinal rod axis. In other words, the longitudinal rod axis 5 and the small ellipse axis 8 fall one into another. The cylindrical shape 15 is shown in a dashed line, and a comparison between the cylindrical shape 15 and the elliptic contour 7 illustrates, that the gap between the pin journal of the crank shaft, which is congruent to the cylindrical shape 15, and the inner shape 6 is bigger in the area of the intersection point between the large ellipse axis 9 and the inner shape 6. But the gap is small in the areas, defined by the intersection point between the small ellipse axis 8 with the inner shape 6.

The embodiment shows notches 10 in the areas of the large gap, defined by the intersection points between the large ellipse axis 9 and the inner shape 6. The transition of the elliptic contour 7 into the notches 10 forms a radius contour, and as a result, the inner shape 6 of the big end eye 3 forms a lemon shape.

Figure 2 shows another embodiment of a connecting rod 1 featuring a small end eye 2 and a big end eye 3 and a rod shaft 4 which interconnects the small end eye and the big end eye 3, and the rod shaft 4 extends in a longitudinal rod axis 5. The connecting rod 1 is formed in a two-part-form with an upper stem part 11 and lower cap part 12, but the parting line 14 is inclined with respect to the longitudinal rod axis 5. The big end eye 3 features an inner shape 6 which forms an elliptic contour 7 with a small ellipse axis 8 and a large ellipse axis 9 extending perpendicularly to the small ellipse axis 8, whereas the small ellipse axis 8 extents in the longitudinal rod axis 5. The inner shape 6 features two notches 10 which notches 10 are arranged in the large ellipse axis 9, and the parting line 14 deviates from the arrangement of the notches 10. In other words, a first notch 10 is arranged in the stem part 11 and a second notch 10 is arranged in the cap part 12. This embodiment shows, that the notches 10 are not used in conjunction with a crack-process for separating the cap part 12 from the stem part 11.

The present invention is not limited by the embodiments described above, which are represented as examples only and can be modified in various ways within the scope of protection defined by the pending patent claims. Thus, the invention is also applicable to different embodiments, in particular of the design of the notches 10, as long as the inner shape 6 of the big end eye 3 forms a lying lemon shape. The lying arrangement explains, that the lemon shape features a longer axis opening into the notches 10, and the longer axis of the lemon shape extents perpendicularly to the longitudinal rod axis 5.

### List of Numerals

- 1: connecting rod
- 2: small end eye
- 3: big end eye
- 4: rod shaft
- 5: longitudinal rod axis
- 6: inner shape
- 7: elliptic contour
- 8: small ellipse axis
- 9: large ellipse axis
- 10: notch
- 11: stem part
- 12: cap part
- 13: screw
- 14: parting line
- 15: cylindrical shape

## Claims

1. Connecting rod (1) for an internal combustion engine, comprising:
- a small end eye (2) for receiving a piston pin,
- a big end eye (3) for receiving a pin journal of a crank shaft,
- a rod shaft (4) which interconnects the small end eye (2) with the big end eye (3), and which rod shaft (4) extends in a longitudinal rod axis (5), and whereas
- the big end eye (3) features an inner shape (6) which forms an elliptic contour (7) in a circumferential direction of the big end eye (3), with a small ellipse axis (8) and a large ellipse axis (9) extending perpendicularly to the small ellipse axis (8), whereas the small ellipse axis (8) extends in the direction of the longitudinal rod axis (5) **characterised in that**
- the inner shape (6) features at least one notch (10) for forming a gap between the pin journal of the crank shaft and the big end eye (3) for oil flow increase.

2. Connecting rod (1) according to claim 1, **characterized in that** the elliptic contour (7) of the inner shape (6) and the at least one notch (10) in the inner shape (6) are formed in the material of the big end eye (3) itself.

3. Connecting rod (1) according to claim 1or 2, **characterised in that** the at least one notch (10) in the inner shape (6) is located in a circumferential area of the large ellipse axis (9) of the elliptic contour (7).

4. Connecting rod (1) according to one of the claims 1 to 3, **characterised in that** the inner shape (6) features two notches (10) which are located opposite to each other.

5. Connecting rod (1) according to claim 4, **characterised in that** the two notches (10) are arranged in intersection points of the large ellipse axis (9) with the inner shape (6).

6. Connecting rod (1) according to one of the previous claims, **characterised in that** the inner shape (6) forms a lemon shape.

7. Connecting rod (1) according to one of the previous claims, **characterised in that** a transition of the elliptic contour (7) into the at least one notch (10) forms a radius contour.

8. Connecting rod (1) according to one of the previous claims, **characterised in that** the connecting rod features a two part form with a stem part (11) and with a cap part (12) which is connected to the stem part (11).

9. Connecting rod (1) according to one of the previous claims, **characterised in that** the inner shape (6) of the big end eye (3) of the connecting rod (1) features a U-shaped contour in its axial direction.
